(19) Europäisches Patentamt

European Patent Office

Office européen des brevets

(11) **EP 1 736 295 A1**

(12) **EUROPEAN PATENT APPLICATION**
published in accordance with Art. 158(3) EPC

(43) Date of publication:
27.12.2006 Bulletin 2006/52

(51) Int Cl.:
*B29C 45/70* (2006.01)    *B29C 45/26* (2006.01)
*H01M 8/02* (2006.01)    *B29K 81/00* (2006.01)
*B29K 105/16* (2006.01)    *B29K 507/04* (2006.01)
*B29L 31/34* (2006.01)

(21) Application number: 05730433.9

(22) Date of filing: 13.04.2005

(86) International application number:
PCT/JP2005/007148

(87) International publication number:
WO 2005/099994 (27.10.2005 Gazette 2005/43)

(84) Designated Contracting States:
AT BE BG CH CY CZ DE DK EE ES FI FR GB GR
HU IE IS IT LI LT LU MC NL PL PT RO SE SI SK TR

(30) Priority: 15.04.2004 JP 2004120449

(71) Applicant: IDEMITSU KOSAN CO., LTD.
Tokyo 100-8321 (JP)

(72) Inventors:
• TANAKA, Takayoshi
2990193 (JP)
• IGA, Toru
2990193 (JP)
• AE, Haruhiko
2990193 (JP)

(74) Representative: Gille Hrabal Struck Neidlein Prop
Roos
Brucknerstrasse 20
40593 Düsseldorf (DE)

(54) **METHOD FOR INJECTION COMPRESSION MOLDING OF CONDUCTIVE THERMOPLASTIC RESIN COMPOSITION**

(57) An injection/compression molding method comprising the steps of: a injection filling step for injection filling a conductive thermoplastic resin composition containing a conductive filler at a ratio of 70 to 95 mass% into a cavity space 13 with the interval in the range of 0.5 to 5.0 mm formed by mating faces 11a, 12a of dies 11, 12 each having a temperature in the range of 150 to 250 °C; and a compression forming step for compression forming, after the filling step is finished and the die space was closed, the conductive thermoplastic resin composition filled in said space at the compression speed in the range of 1.0 to 20 mm/sec with the compression pressure of 10 MPa or higher. As obtained molded product contains the conductive filler homogeneously distributed at a high content ratio, so that the molded product can be applied to, for instance, a separator for a fuel cell.

FIG.1

EP 1 736 295 A1

**Description**

[TECHNICAL FIELD]

The present invention relates to an injection/compression molding method for a conductive thermoplastic resin composition, the method enabling producing a molded product of conductive thermoplastic resin composition containing a conductive filler at high content rate with the conductive filer homogeneously dispersed therein.

[BACKGROUND ART]

Recently, from the view point of prevention of environmental contamination and energy saving, a fuel cell attracts attention as a clean power generator generating no waste other than water capable of generating power using a fuel gas containing hydrogen and air containing oxygen and through an electrolytic process, thus the fuel cells for homes and cars have been actively developing. The fuel cell as described above has a high power generation efficiency and causes no environmental contamination, but can provide only a low voltage taken from the unit cell (one fuel cell), so that a layered structure formed by several tens to several hundreds unit cells is used.

When unit cells are formed into a layered structure, separators are used each as a component capable of providing conductivity to each unit cell and also functioning as a boundary film for separating a fuel gas supplied to each unit cell from air. This separator for a fuel cell as a product should have high conductivity for collecting power from an electrode, and also such characteristics as the gas barrier property, mechanical strength, and anticorrosion property against electrolytes (such as phosphoric acid or sulfuric acid) and ions because of the requirements such as that a flow path for flowing a fuel gas or the like therein or the like is required to be formed on a surface thereof.

In a process for manufacturing a fuel cell, it is important to obtain a molded product with excellent fluidity of resin in a molding process and having homogeneous thickness. But since fluidity of thermoplastic resin containing a conductive filler such as a carbon powder or the like at a high content rate (for instance, 80 mass% or higher) is extremely low, and the thermoplastic resin is easily cooled, it is difficult to mold the resin. When molding a material poor in moldability, generally a method such as stamping or compression molding is employed, but since a melt press molding machine is used for molding the material, the stamping molding or press molding has the low productivity, and therefore the molding methods as described above are not adapted to mass production.

Therefore, there has been the strong need for development of a separator for a fuel cell using an injection molding method with high productivity. As the technique as described above, there has been the technique for molding a thermoplastic resin composition such as polyacetal containing, for instance, a pitch-based carbon fiber at ratio of 80 to 98 mass% with various types of molding methods including the injection molding (Refer to, for instance, Patent document 1). Further there has been proposed the technique for molding a separator for a fuel cell using a conductive inorganic material or a resin material by means of the injection molding or compression molding (Refer to, for instance, Patent document 2).

[Patent document 1] Japanese Patent Laid-Open Publication No. 2003-82247 (see [Claim 4], paragraph number [0063] and the like)

[Patent document 2] Japanese Patent Laid-Open Publication No. 2003-242994 (see paragraph numbers [0014] to [0024] and the like)

[DISCLOSURE OF THE INVENTION]

[PROBLEMS TO BE SOLVED BY THE INVENTION]

In a case where a separator for a fuel cell is manufactured by molding a resin material containing a conductive filler at a high content rate by means of injection/compression molding method, the conductive filer filled in the resin material is cooled more quickly as compared to thermoplastic resin, so that it is difficult to obtain with the homogeneous wall thickness. For instance, to obtain a molded product having homogeneous wall thickness, when filling resin in a heating/cooling process, it is necessary to heat a die to a very high temperature (for instance, 270 to 300 °C) and then cool the die, and sometimes the process described in Patent document 1 and Patent document 2 as described above can hardly be carried out, therefore it has been difficult to mold a separator for a fuel cell with a conductive filler filled therein at a high content rate.

An object of the present invention, in view of the circumstances as described above, is to provide an injection/compression molding method for a conductive thermoplastic resin composition, the method enabling producing a molded product of conductive thermoplastic resin composition containing a conductive filler at high content rate with the conductive filer homogeneously dispersed therein by improving the fluidity of the resin composition during the molding process.

[MEANS FOR SOLVING THE PROBLEMS]

In the injection/compression molding method for a thermoplastic resin composition according to the present invention, a conductive thermoplastic resin composition is molded by means of injection/compression molding, and the method comprises a injection filling step for injection filling a conductive thermoplastic resin composition containing a conductive filler at ratio of 70 to 95 mass% into a cavity space formed by mating faces of dies each having a temperature in the range of 150 to 250 °C, the space between the mating faces of dies being in the range of 0.5 to 5.0 mm; and a compression forming step for compression forming, after the filling step is finished and the die space was closed, the conductive thermoplastic resin composition filled in the space at the compression speed in the range of 1.0 to 20 mm/sec and with the compression pressure of 10 MPa or higher.

With the injection/compression molding method for conductive thermoplastic resin according to the present invention, conductive thermoplastic resin is molded by means of injection/compression molding through the injection filling step and the compression forming step, and therefore the fluidity of the conductive thermoplastic resin is substantially improved during the molding process, so that also the fluidity of the resin is excellent, and because of this feature there is advantageously provided the method of molding a molded product with a conductive filler filled therein at a high content rate.

Further when the injection/compression molding method according to the present invention is employed, the shear rate expressed by the following expression (I) or (II) in injecting and filling the conductive thermoplastic resin composition is preferably in the range of 5000 to 50000/sec

$$\gamma_a = 4Q/\pi R^3 \quad \cdots\cdots \quad (\text{I})$$

(Here Q is injection rate (in cc/sec), R is radius of gate (in cm).)

$$\gamma_b = 6Q/Wh^2 \quad \cdots\cdots \quad (\text{II})$$

(Here Q is injection rate (in cc/sec), W is width of gate (in cm), and h is thickness of gate (in cm).)

With the present invention, because the shear rate expressed by the expression (I) (when a cross section of a gate in a die is circular) or the expression (II) (when a cross section of a gate in a die is rectangular) is within a specific range in the process of injection filling the conductive thermoplastic resin composition, and therefore the conductive filler is homogeneously dispersed like powder in the thermoplastic resin in the injection filling process. Because of this feature, also the fluidity of the thermoplastic resin composition is improved in the die, and further also in the obtained molded product, the conductive filler is homogeneously dispersed, which provides excellent appearance.

In the injection/compression molding method according to the present invention, a supercritical fluid may be injected into the conductive thermoplastic resin composition to be injected and filled, and also with this operation, the conductive filler is homogeneously dispersed in thermoplastic resin like powder, and therefore the effects described above can advantageously be achieved.

As the supercritical fluid, carbon dioxide gas and/or nitrogen gas in the supercritical state is preferable.

Further in the injection/compression molding method according to the present invention, a chemical foaming agent for generating carbon dioxide and/or nitrogen gas may be added to the conductive thermoplastic resin, and also with this operation, the conductive filler is homogeneously dispersed like powder in the thermoplastic resin in the injecting and filling process, so that the effects described above can advantageously be obtained.

In the injection/compression molding method according to the present invention, it is preferable to form a heat insulating layer with the thickness from 0.5 to 3.0 mm on a surface of the die described above.

With the present invention as described above, a heat insulating layer with the specified thickness is formed on a surface of a die, so that generation of weld lines or sink mark can advantageously be prevented.

In the injection/compression molding method according to the present invention, the thermoplastic resin is preferably polyphenylene-sulfide (PPS), and the conductive filler is preferably graphite.

In the conductive thermoplastic resin according to the present invention as described above, the thermoplastic resin is polyphenylene-sulfide (PPS), and the conductive filler is graphite, so that a molded product best suited to be used as a separator for a fuel cell can be provided.

[BRIEF DESCRIPTION OF DRAWINGS]

[FIG.1] Fig. 1 is a view showing an injecting/compression unit of an embodiment for implementing the injection/compression molding method according to the present invention, and is a general view showing a die in the opened state (in the state where injection and filling are performed);
[FIG.2] Fig. 2 is different from Fig. 1 in that it shows a general view showing the die in the closed state (in the state where compression forming is being carried out); and
[FIG.3] Fig. 3 is a general view showing a fuel cell using a separator for a fuel cell molded by the injection/compression molding method according to an embodiment of the present invention.

[EXPLANATION OF CODES]

| 1... | injection/compression molding unit |
| 11, 12... | die |
| 11a, 12a... | mating face |
| 13... | cavity space |
| 15... | conductive thermoplastic resin composition |
| 20... | injection unit |
| 30... | gate |
| 50... | fuel cell |
| 51... | fuel electrode (anode) |
| 52... | matrix |
| 53... | air electrode (cathode) |
| 54... | separator for a fuel cell |
| 55... | groove |

[BEST MODE FOR CARRYING OUT THE INVENTION]

In the injection/compression molding method for molding a conductive thermoplastic resin composition according the present invention (sometimes described simply as the "molding method according to the present invention" hereinafter), conductive thermoplastic resin is molded through a specified injection filling step as well as through a compression forming step, and the conductive thermoplastic resin molded product obtained by the molding method according to the present invention (sometimes described simply as "molded product" hereinafter) contains a conductive filler filled therein at a high content rate, and the conductive filler is well dispersed therein, so that the molded product may be applied, for instance, to a separator for a cell.

As the thermoplastic resin which may be used in the molding method according to the present invention, it is preferable to use a resin material having the heat resistance, waterproof characteristics, and chemical resistance, and there can be enlisted, for instance, polyphenylene sulfide (PPS) resin, acrylonitrile-styrene-butadiene (ABS) resin, polycarbonate (PC) resin, polyphenylene oxide (PPO) resin, polyacetal resin and the like as the material, and one, two of more of the material as described above may be used singly or in combination. In order to carry out the method according to the present invention, it is preferable to use the polyphenylene sulfide (PPS) resin best suited as a material for forming a separator for a fuel cell.

As the conductive filler, there can be enlisted various types of graphite such as natural graphite, synthetic graphite, and expanded graphite, carbon black, carbon fiber, gas-phase carbon fiber, carbon nanotube, and the like, and one or two or more among the materials may be used singly or in combination. For carrying out the method according to the present invention, it is preferable to use graphite having small electric specific resistance, high electric conductivity, and excellent dispersibility.
A form of the conductive filler is preferably spherical, or powder-like, and may be particles with the average diameter in the range of 10 to 200 $\mu$m and the balk specific gravity in the range of 0.15 to 0.90 g/cm$^3$.

The conductive thermoplastic resin composition is formed by mixing this conductive filler with the thermoplastic resin described above. The conductive filler is contained in the thermoplastic resin at a ratio of 70 to 95 mass%, preferably at a ratio of 75 to 85 mass%, and more preferably at a ratio of 80 to 85 mass%.
Since the conductive thermoplastic resin composition used in the method according to the present invention contains a conductive filler at a high content rate, the conductivity thereof is high. By applying the molding method according to the present invention to injection/compression molding of the conductive thermoplastic resin composition as described above, the conductive filler is well dispersed in the molded product.

To obtain a conductive thermoplastic resin composition by mixing or kneading the thermoplastic resin and the conductive filler each other or together, it is preferable to homogeneously mix or knead the materials each other or together with any known mixer or a kneader such as various mixers including a roller, an extruder, a kneader, a banbary mixer, a Henschel mixer, a planetary mixer and the like.

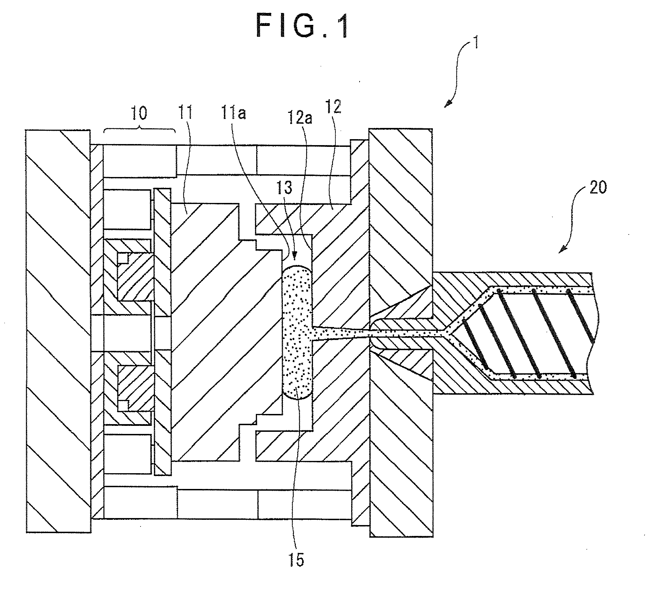

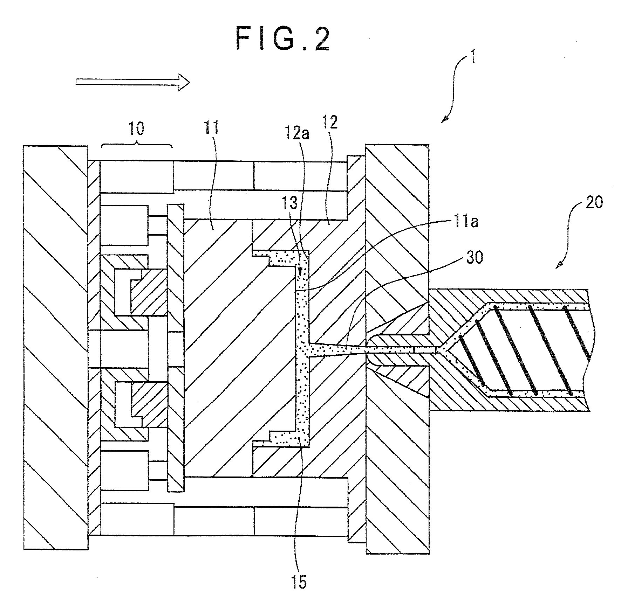

The method according to the present invention is carried out by molding conductive thermoplastic resin produced by mixing the thermoplastic resin and the conductive filler each other by injection and compressing, and a mode for carrying out the injection/compression molding is described with reference to Fig. 1 and Fig. 2.

Fig. 1 is a schematic view showing an injection/compression molding unit 1 in the state where dies 11, 12 are opened and a conductive thermoplastic resin composition 15 is injected and filled therein, while Fig. 2 is a schematic view showing the dies 11, 12 in the state where the dies 11, 12 are closed and the conductive thermoplastic resin composition 15 is compressed and formed.

For carrying out the injection/compression molding method according to the present invention, as shown in Fig. 1, at first, in the state where a compression unit 10 is retarded, mating faces of the dies 11, 12 are separated and opened to form a cavity space 13 (sometimes described simply as "space 13" hereinafter), and the conductive thermoplastic resin composition 15 is injected and filled in the space 13 from an injection unit 20 ((1) injection filling step).

When a specified quantity of conductive thermoplastic resin composition 15 has been injected and filled therein, in the state where the compression unit 10 is moved forward as shown in Fig. 2 (in the direction indicated by the arrow in Fig. 2), the dies 11, 12 are closed to load a clamping force for the purpose to compress and form the conductive thermoplastic resin composition 15 filled therein, thus a molded product having a specified form being obtained ((2) compression forming step).

In the injection/compression molding method according to the present invention, at first in the injection filling step (1), it is preferable to set the interval of the cavity space 13 formed between mating faces 11a, 12a of the dies 11, 12 to the range of 0.5 to 5.0 mm, and more preferably to the range of 3.0 to 5.0 mm. By setting the interval to the range as described above, the conductive thermoplastic resin composition 15 in the melted state can smoothly be injected and filled, and in addition the interval advantageously functions as a space for compressing in the compression forming step (2), so that the processing for compression forming the composition 15 can smoothly be performed.

There is no specific restriction over a method of heating the dies 11, 12 in the injection filling step (1), and any known heater may be employed for heating the dies 11, 12 before the conductive thermoplastic resin composition 15 is filled therein.

Further electrically heated bodies may be provided on surfaces of the dies 11, 12 and the electrically heating bodies may be energized, before the resin is filled therein, for heating the dies 11, 12 up to a prespecified temperature. As the electrically heating body, there can be enlisted, for instance, silicon nitrate, titanium nitrate, aluminum nitrate, zirconia oxide and the like.

A temperature of the dies may be decided according to a type of the conductive thermoplastic resin composition, and generally the temperature is in the range of 150 to about 250 °C. Since the dies are not required to be heated to a high temperature (for instance, in the range of 270 to 300 °C) like that employed in the conventional technology in the molding method according to the present invention, the molded product can smoothly be cooled, and therefore the injection/compression molding process can easily be carried out.

Further a heat insulating layer may be provided on a surface of each of the dies 11, 12, and when a heat insulating layer is provided on a surface of each of the dies 11, 12, generation of weld line or sink in the molded product can be prevented. The thickness of the heat insulating layer may be in the range of 0.5 to about 3.0 mm.

Any of zirconia-based ceramics, refractory polyimide, alumina and the like may be used as a material for the heat insulating layer. Such a commercial product ULPAC (registered trademark) die or ULPAC layer (produced by Taiyo Manufacturing Co. Ltd.) may be used.

In the injection filling step (1), when the conductive thermoplastic resin composition 15 is injected and filled in the space 13, it is preferable to take any of the following measures 1 to 3 for improving the dispersibility and adaptability to be formed of the conductive filler contained in the molded product at a relatively high content rate. These measures may be employed one by one or in combination.

In the measure 1 for homogeneously dispersing the conductive filler in a molded product and improving the adaptability to be formed, the shear rate in the injection filling step as shown by the Expression (I) or (II) below is set to the range of 5000 to 50000/sec.

The shear rate $\gamma_a$ expressed by the Expression (1) corresponding to a shear rate when a cross section of a gate 30 is circular, and the shear rate $\gamma_b$ expressed by the Expression (II) corresponding to that when a cross section of the gate 30 is rectangular.

$$\gamma_a = 4Q/\pi R^3 \quad \cdots\cdots \quad (\text{I})$$

(Here Q is injection rate (in cc/sec), R is radius of gate (in cm).)

$$\gamma_b = 6Q/Wh^2 \quad \cdots\cdots \quad (\text{II})$$

(Here Q is injection rate (in cc/sec), W is width of gate (in cm), and h is thickness of gate (in cm).)

The injection ratio Q shown in the Expression (I) and Expression (II) indicates a quantity (volume) of resin injected per unit period of time, and in the injection filling step (1) in the present invention, the injection rate Q is generally to the range of about 80 to about 500 (cc/sec), and the value may be set according to a type of used thermoplastic resin.

In the measure 2, for instance, a supercritical fluid is injected into the conductive thermoplastic resin composition 15 in the melted state. As the supercritical fluid, it is preferable to use carbon dioxide gas or nitrogen gas in the supercritical state.

The supercritical state as used herein indicates the state where a temperature and a pressure are over those allowing coexistence of a gas and a liquid and the density of the gas becomes equal to that of the liquid so that the gas phase and the liquid phase are not differentiated from each other, and a fluid generated in this supercritical state is defined as the supercritical fluid. A temperature and a pressure in the supercritical state are a supercritical temperature and a supercritical pressure respectively, and for instance, in a case of carbon dioxide, the supercritical temperature and supercritical pressure are 31 °C and 7.4 MPa respectively. The supercritical fluid may be injected into a conductive thermoplastic resin composition at ratio of 0.5 to 3.0 mass%, and for instance, in a cylinder, the supercritical fluid may be injected into the composition in the melted state.

Further in the measure 3, for instance, a chemical foaming agent is added to the conductive thermoplastic resin composition 15. In a case where the chemical foaming agent is added in the resin composition to plasticize and melt the resin composition, it is preferable to use a chemical foaming agent generating nitrogen gas or carbon dioxide gas when thermally decomposed, and the chemical foaming agent may be dry-blended in the conductive thermoplastic resin composition not having been melted at ratio of 1.0 to about 5.0 mass%.

As described above, the conductive thermoplastic resin composition 15 plasticized and melted in the injection filling step (1) is injected and filled in the space 13 formed between mating faces 11a, 12a of the dies 11, 12.

When a prespecified quantity of the conductive thermoplastic resin composition 15 has been injected and filled therein, the injection/compression molding unit 10 is moved forward to carry out the compression forming step (2) for compression forming the conductive thermoplastic resin composition 15 filled in the closed dies 11, 12.

The compression forming step (2) is started at the time point when the conductive thermoplastic resin composition 15 has been completely filled, but the step may be start at a different time point when the filling of conductive thermoplastic resin composition 15 is completed (for instance, 0.1 to 0.5 sec before completion of the filling operation).

When the molding method according to the present invention is carried out, the compression speed in the compression forming step (2) is preferably set to the range of 1 to 20 mm/sec and more preferably to the range of 5 to 20 mm/sec. When the compression speed is set to the range described above, the conductive thermoplastic resin composition 15 injected and filled as described above can be compressed and formed smoothly, but when the compression speed is less than 1 mm/sec, the wall thickness distribution in the obtained molded product may be degraded (for instance, like in a case where the gate side is thick and that in the fluidized end is thin), and the adaptability of the conductive thermoplastic resin composition 15 to an continuous operation for molding may be negatively affected like in a case where a frequency of short shot becomes higher. On the other hand, when the compression speed is over 20 mm/sec, quality of the molded product is stabilized, but a load to a molding machine or a die is large, and various problems may occur such as that the molding machine is depleted quickly.

Further in the compression forming step (2), the compression pressure is 10 MPa or higher, and preferably 50 MPa. A pressure for clamping the dies in this step is about 60 tons, and preferably about 300 tons. When the compression pressure is 10 MPa or higher, the material is sufficiently compressed and formed, and a molding body having a good external appearance can be obtained, but when the compression pressure is smaller than 10 MPa, appearance inferiority such as a sink or warpage will generated on the surface of a molded article due to insufficient pressure.

The compression unit 10 is moved forward as described above, the dies 11, 12 are closed, a die clamping force is loaded thereto to compress and form the conductive thermoplastic resin composition 15 filled therein, and then the dies 11, 12 are cooled to cool and solidify the conductive thermoplastic resin composition 15 inside the dies. There is no specific restriction over the cooling conditions, but the cooling temperature is generally in the range of 160 to 250 °C (preferably in the range of 180 to 230 °C), and the cooling period of time should be in the range of 30 to about 90 seconds (preferably in the range of 50 to 70 seconds).

When the conductive thermoplastic resin composition 15 is sufficiently cooled and solidified, the dies 11, 12 are opened and the molded product is taken out, thus a molded product with a conductive filler homogeneously dispersed therein being obtained.

An representative embodiment of the injection/compression molding method according to the present invention is described with reference to the injection/compression molding unit 1 shown in Fig. 1 and Fig. 2.

At first, in the state where the interval of the space 13 formed between the mating faces 11a, 12a of the dies 11, 12 is in the range of 0.5 to 5.0 mm as shown in Fig. 1, the conductive thermoplastic resin composition 15 in the melted state is injected and filled in the dies 11, 12 ((1) injection filling step). In this step, by carrying out any of the measures 1 to 3 described above, the conductive filler is homogeneously dispersed like powder in thermoplastic resin in the injection filling step.

After the conductive thermoplastic resin composition 15 in the melted state is sufficiently filled in the dies in the injection filling step (1), the compression unit 10 is moved forward as shown in Fig. 2, the dies 11, 12 are closed with the clamping force loaded thereto, and the conductive thermoplastic resin composition 15 in the dies is compressed and formed into a desired form under the compression forming conditions as described below ((2) compression forming step).

(Compression forming conditions)

Compression speed: 1 to 20 mm/sec
Compression pressure: 10 MPa or higher

After the compression forming step (2), the dies 11, 12 are cooled for 30 to 90 seconds (preferably for 50 to 70 seconds) at a cooling temperature in the range of 160 to 250 °C (preferably in the range of 180 to 230 °C) to cool and solidify the conductive thermoplastic resin composition 15 in the dies. When the composition has been solidified, the dies 11, 12 are opened, and the solidified composition is taken out, thus a molded product with a desired form being obtained.

With the injection/compression molding method according to the present invention as described above, the injection filling step (1) and compression forming step (2) are carried out under prespecified conditions, the fluidity of the conductive thermoplastic resin composition 15 is kept excellent during the molding process, and also the adaptability to be molded is kept good during the process. Because of the features, the molding method allowing for molding of a molded product with a conductive filler contained therein at a high content rate is advantageously provided.

Further by carrying out any of the measures 1 to 3 in the injection filling step (1), a conductive filler is homogeneously dispersed in the thermoplastic resin like powder in the injection filling step, and therefore the fluidity of the conductive thermoplastic resin composition 15 in the dies is kept good, and the conductive filler is homogeneously dispersed also in the molded product, and further the excellent appearance is provided.

Further, when a heat insulating layer with the thickness in the range of 0.5 to 3.0 mm is formed on a surface of each of the dies 11, 12, generation of weld line and sink in the molded product can advantageously be prevented.

Further by employing polyphenylene sulfide (PPS) as the thermoplastic resin and graphite as the conductive filler for preparing the conductive thermoplastic resin composition 15, a molded product best suited to be used as a separator for a fuel cell is provided with this injection/compression molding method.

The molded product obtained with the injection/compression molding method according to the present invention contains a conductive filler at a high content rate and the conductive filler is homogeneously distributed in the molded product, so that a molded product applicable to applications requiring high conductivity is provided. The molded product according to the present invention can be molded into a desired form, so that the molded product may be used in a wide range, for instance, as a separator for a fuel cell (especially as a separator for a solid polymer type of fuel cell), a resin-made electrode, and an electric circuit.

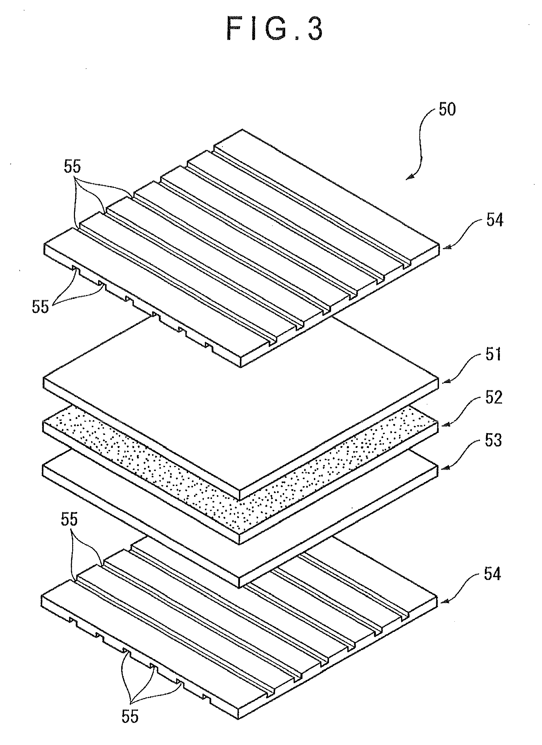

Fig. 3 is a general view showing a basic structure of a fuel cell 50 using therein a separator for a fuel cell using a molded product obtained with the injection/compression molding method according to the present invention.

The fuel cell 50 shown in Fig. 3 includes a fuel electrode 51, a matrix 52, an air electrode 53, and a separator 54 for a fuel cell (sometimes described simply as "separator 54" hereinafter), and a plurality of grooves 55 are formed on both the top and rear surfaces of this separator 54 respectively.

The plurality of grooves 55 formed on the separator 54 for a fuel cell may be formed in batch simultaneously when the separator 54 is formed with the injection/compression molding method according to the present invention, and in this case, mechanical machining such as drilling is not required, and the separator 54 can be produced with low cost. When the separator 54 having a specific form is required, sometimes it may be hard to obtain the separator 54 by carrying out the injection/compression molding process once using dies, and in that case, mechanical machining such as cutting, drilling, screw thread cutting, and the like may be performed to the obtained molded product.

The embodiment of the present invention described above shows only an aspect of the present invention, and the present invention is not limited to the embodiment described above, and it is needless to say that the modifications and improvements within a range in which the objects and effects of the present invention can be achieved are included within a scope of the present invention. Further for carrying out the present invention, structures and forms other than those described above may be employed within a range in which the objects and effects of the present invention ca be achieved.

For instance, in the embodiment described above, the conductive thermoplastic resin composition 15 comprises a conductive filler and thermoplastic resin, but other fillers may be added to the conductive thermoplastic resin composition 15 on the condition that the effects of the present invention are not spoiled.

Specifically the fillers include, but not limited to, glass fiber, potassium titanate whisker, zinc oxide whisker, aluminum borate whisker; fiber-based fillers such as aramid fiber, alumina fiber, silicon carbonate fiber, ceramic fiber, asbestos fiber, gypsum fiber, and metal fiber; silicates such as wallastenite, zeolite, sericite, kaolin, mica, clay, pyrophyllite, bentonite, asbestos, talc, and alumina silicate; metallic compounds such as alumina, silicon oxide, magnesium oxide, zirconium oxide, titanium oxide, and ferric oxide; carbonates such as calcium carbonate, magnesium carbonate, and dolomite; sulfates such as calcium sulfate, and barium sulfate; hydroxides such as magnesium hydroxide, calcium hydroxide, and aluminum hydroxide; and non fiber-based fillers such as glass beads, glass flake, ceramic beads, boron nitrate, silicon carbonate, and silica, and the materials may be hollow. The materials may be used singly respectively or in combination. Further to obtain the more improved mechanical strength, the fiber-based fillers or non fiber-based fillers may be preprocessed with any coupling agent such as isocianate-based compounds, organic silane-based compounds, organic titanate-based compounds, organic borane-based compounds, or epoxy-based compounds prior to use thereof.

Further any of additives including a crystal nucleus agent such as an organic phosphor compound, or polyether ether, a coloring preventing agent such as hyposulfite, an antioxidant such as hindered phenol or hindered amine, UV-ray preventing agent, a coloring agent such as die or pigment, a thermal stabilizer, a lubricant, an antistatic agent, and a plasticizer may be added to the conductive thermoplastic resin composition 15 on the conditions that any negative influence is not given to the effects provided by the present invention.

Further forms of the fuel cell 50 (Polymer Electrolyte Fuel Cell) and the separator 54 shown in Fig. 3 are only examples, and configuration of the fuel cell 50 and a form of the separator 54 are not limited to those shown in the figure, and any configuration and form may be employed.

To carry out the injection/compression molding method according to the present invention, it is preferable for realizing desirable dimensions of a molded product to design a die by previously estimating sink and the like of the conductive thermoplastic resin composition 15, and in this case, a form of the die is accurately reflected to a form of the molded product, and especially dimensional accuracy in the thickness can be improved.

Any structure and form may be employed for carrying out the present invention on the condition that the effects of the present invention are provided.

[Examples]

The present invention is described in further details with reference to the examples and comparative examples, but the present invention is not limited to the examples described below.

[Example 1]

Polyphenylene sulfide (PPS) (IPC-1 produced by Idemitsu Petrochemical Co. Ltd with the viscosity of 7 Pa·s in the melted state) was used as thermoplastic resin, and graphite (CGC-100H, Japan Graphite Industry Co. Ltd.) as a conductive filler was mixed in the thermoplastic resin at ratio of 82 mass% to obtain a conductive thermoplastic resin composition.

The fluidity of the conductive thermoplastic resin composition as defined with the spiral flow value at the resin temperature of 320 °C and the die temperature of 135 °C is 60 mm when the wall thickness is 1.0 mm, and 90 mm when the wall thickness is 1.5 mm.

This conductive thermoplastic resin composition was molded with the injection/compression molding method according to the present invention using the injection/compression molding machine having the injection/compression molding unit as shown in Fig. 1 and Fig. 2 (AZ-7000 produced by Nissei Plastic Industrial Co. Ltd. with the clamping force of 350 tons (3430kN) by carrying out the injection filling step (1) and the compression forming step (2) as described below to obtain a plate-formed molded product (with the size of 200 mm (height) x 300 mm (width) x 1.5 mm (thickness)). The used die is the so-called hot runner die, and an outlet diameter of the hot runner was 2.0 mm. The gate was a four-point fan gate with the width of 20 mm and the thickness of 2.0 mm, and the gate was formed in the vertical edge side of the plate-like molded product (at the side with the length of 200 mm).
The die temperature was controlled with a heater to the temperatures (180 °C or 230 °C) shown in Table 1 below.

(1) Injection filling step

In the injection/compression unit shown in Fig, 1, the interval between the mating faces of the dies was set to 2.0 mm, and the conductive thermoplastic resin composition in the melted state was filled in the cavity space of the dies so that the wall thickness of an obtained molded product was 1.5 mm. The injection rate was adjusted following the following expression (II) in the injection filling step so that the shear rate would be 5100/sec.
$$\gamma_b = 6Q/Wh^2 \quad \cdots\cdots \quad (\text{II})$$

(Here Q is injection rate (in cc/sec), W is width of gate (in cm), and h is thickness of gate (in cm).)

(2) Compression forming step

At the time point when the conductive thermoplastic resin composition in the melted state has been filled in the dies in the injection filling step (1) described above, the compression unit was moved forward to tighten the dies, and then the dies were closed to compress and form the conductive thermoplastic resin composition in the cavity space of the dies at the compression speed of 5.0 mm/sec with the compression pressure of 50 MPa.
After the compression forming step was finished, the dies were cooled for about 50 seconds at 180 °C to cool and solidify the conductive thermoplastic resin composition, and when the composition was cooled and solidified, the composition was taken out from the dies to obtain a molded product according to the present invention.

[Example 2]

In this example, a plate-formed molded product according to the present invention was obtained using the same method as that described in Example 1 excluding the point that the shear rate was changed from 5100/sec in the injection/compression molding method described in Example 1 to 34400/sec.

[Example 3]

In this example, a plate-formed molded product according to the present invention was obtained using the same method as that described in Example 1 excluding the point that the die temperature was changed from 180 °C to 230 °C.

[Example 4]

In this example, a plate-formed molded product according to the present invention was obtained using the same method as that described in Example 3 excluding the point that the shear rate was changed from 5100/sec to 34400/sec.

[Example 5]

In this example, a plate-formed molded product according to the present invention was obtained using the same method as that described in Example 3 excluding the point that the interval between the dies was changed from 5.0 mm in Example 3 to 2.0 mm.

[Example 6]

In this example, a plate-formed molded product according to the present invention was obtained using the same method as that described in Example 3 excluding the point that the compression speed was changed from 5.0 mm/sec in Example 3 to 1.0 mm/sec. The molding conditions employed in the injection/compression molding method in Examples 1 to 6 are shown in Table 1.

Conditions for Injection/Compression Molding

Table 1

|  | Die temperature (°C) | Interval between dies (mm) | Shear rate (/sec) | Compression speed (mm/sec) | Compression pressure (MPa) |
|---|---|---|---|---|---|
| Example 1 | 180 | 5.0 | 5100 | 5.0 | 50 |
| Example 2 | 180 | 5.0 | 34400 | 5.0 | 50 |
| Example 3 | 230 | 5.0 | 5100 | 5.0 | 50 |
| Example 4 | 230 | 5.0 | 34400 | 5.0 | 50 |
| Example 5 | 230 | 2.0 | 34400 | 5.0 | 50 |
| Example 6 | 230 | 5.0 | 34400 | 1.0 | 50 |

[Test Example 1]

The wall thickness distribution (A) and the volume resistivity (B) of the plate-formed products obtained in Examples 1 to 6 were measured with the method as described below. A result of measurement is shown in Table 2.

(A) Wall thickness distribution

The wall thickness was measured at two positions on each molded product (in the gate side and at a terminal in the fluidizing section) with a micrometer caliper procurable from the market (1/100 mm) to check the maximum value and the minimum value.

(B) Volume resistivity

Measurement was carried out with a resistivity gauge procurable from the market (Rorester GP/ASP probe (produced by Mitsubishi Chemicals Co. Ltd.) according to JIS K7194 by means of the four probe method to check the maximum value and the minimum value.

(Result)

Table 2

|  | Wall thickness distribution (mm) | | Volume resistivity (mΩ·cm) | |
|---|---|---|---|---|
|  | Maximum | Minimum | Maximum | Minimum |
| Example 1 | 1.78 | 1.5 | 20 | 20 |
| Example 2 | 1.65 | 1.53 | 20 | 15 |
| Example 3 | 1.64 | 1.52 | 20 | 15 |
| Example 4 | 1.51 | 1.51 | 15 | 15 |
| Example 5 | 1.68 | 1.57 | 15 | 15 |
| Example 6 | 1.75 | 1.58 | 15 | 15 |

As understood from the result shown in Table 2, the plate-formed molded products according to the present invention obtained by means of the injection/compression molding method in Examples 1 to 6 have the homogeneous wall thickness distribution and excellent volume resistivity respectively.
In Examples 1 to 6, for carrying out the injection/compression molding method according to the present invention, to check the dispersed state of graphite as a conductive filler in the conductive thermoplastic resin composition in the melted state to be injected, the state of resin at an outlet port of the hot runner with the diameter of 2 mm was checked following the so-called hot runner purge, and it was identified in any of Examples 1 to 6 that the conductive filler was homogeneously distributed like powder in the conductive thermoplastic resin composition in the injection process.

[Example 7]

A plate-formed molded product according to the present invention was obtained using the same method as that employed in Example 1 excluding the point that carbon dioxide gas in the supercritical state was injected to the conductive thermoplastic resin composition in the melted state to be injected so that the content rate would be in the range of 0.5 to 3.0 mass% against the total weight of the conductive thermoplastic resin composition in stead of adjusting the shear rate to 5100/sec (keeping the shear rate at 1000/sec) in the injection/compression molding method in Example 1. The carbon dioxide gas in the supercritical state was injected into the conductive thermoplastic resin composition in the melted state with a cylinder section of an injection/compression molding machine.

[Example 8]

A plate-formed molded product according to the present invention was obtained by using the same method as that in Example 7 excluding the point that the die temperature was changed from 180 °C employed in the injection/ compression molding method in Example 7 to 230 °C.

[Example 9]

A plate-formed molded product according to the present invention was obtained by using the same method as that in Example 8 excluding the point that a chemical foaming agent (polystyrene EB201 (20% master batch including barium diazo carboxylate as an ingredient) produced by Eiwa Chemical Ind. Co. Ltd.) was dry-blended in the conductive thermoplastic resin composition at a content rate of 3 mass% in stead of injecting carbon dioxide gas in the supercritical state.

The molding conditions employed in the injection/compression molding methods in Examples 7 to 9 are shown in Table 3.

(Conditions for Injection/Compression Molding)

Table 3

|  | Die temperature (°C) | Interval between dies (mm) | Improving dispersibility by | Compression speed (mm/sec) | Compression pressure (MPa) |
|---|---|---|---|---|---|
| Example 7 | 180 | 5.0 | injecting supercritical fluid | 5.0 | 50 |
| Example 8 | 230 | 5.0 | Injecting supercritical fluid | 5.0 | 50 |
| Example 9 | 230 | 5.0 | Addiing foaming agent | 5.0 | 50 |

[Test Example 2]

Measurement was made for the wall thickness distribution (A) and the volume resistivity (B) of the molded products obtained in Examples 7 to 9 with the same method as that employed in Test Example 1. A result of measurement is as shown in Table 4.

(Result)

Table 4

| | Wall thickness distribution (mm) | | Volume resistivity (mΩ·cm) | |
|---|---|---|---|---|
| | Maximum | Minimum | Maximum | Minimum |
| Example 7 | 1.69 | 1.58 | 20 | 15 |
| Example 8 | 1.53 | 1.51 | 15 | 15 |
| Example 9 | 1.62 | 1.55 | 20 | 15 |

As understood from the result shown in Table 4, the plate-formed molded products according to the present invention obtained with the injection/compression molding methods in Examples 7 to 9 have homogeneous wall thickness distribution and excellent volume resistivity.
Like in Examples 1 to 6 described above, the dispersed state of graphite as a conductive filler dispersed in the conductive thermoplastic resin composition in the melted state to be injected was checked, and it was confirmed in any of Examples 7 to 9 that the conductive filler was dispersed homogeneously like powder in the conductive thermoplastic resin composition when injected.

[Example 10]

A plate-formed molded product according to the present invention was obtained with the same method as that employed in Example 1 excluding the point that a heat insulating layer (ULPAC produced by Taiyo Manufacturing Co. Ltd. (registered trade name; same is true also in the following description)) with the thickness of 2.0 mm was formed on a surface of the used die in the injection/compression molding method described in Example 1.

[Example 11]

A plate-formed molded product according to the present invention was obtained with the same method as that employed in Example 2 excluding the point that a heat insulating layer (ULPAC produced by Taiyo Manufacturing Co. Ltd.) with the thickness of 2.0 mm was formed on a surface of the used die in the injection/compression molding method described in Example 2.

[Example 12]

A plate-formed molded product according to the present invention was obtained with the same method as that employed in Example 3 excluding the point that a heat insulating layer (ULPAC produced by Taiyo Manufacturing Co. Ltd.) with the thickness of 2.0 mm was formed on a surface of the used die in the injection/compression molding method described in Example 3.

[Example 13]

A plate-formed molded product according to the present invention was obtained with the same method as that employed in Example 4 excluding the point that a heat insulating layer (ULPAC produced by Taiyo Manufacturing Co. Ltd.) with the thickness of 2.0 mm was formed on a surface of the used die in the injection/compression molding method described in Example 4.

[Example 14]

A plate-formed molded product according to the present invention was obtained with the same method as that employed in Example 5 excluding the point that a heat insulating layer (ULPAC produced by Taiyo Manufacturing Co. Ltd.) with the thickness of 2.0 mm was formed on a surface of the used die in the injection/compression molding method described in Example 5.

[Example 15]

A plate-formed molded product according to the present invention was obtained with the same method as that employed in Example 6 excluding the point that a heat insulating layer (ULPAC produced by Taiyo Manufacturing Co. Ltd.) with the thickness of 2.0 mm was formed on a surface of the used die in the injection/compression molding method described in Example 6.

[Example 16]

A plate-formed molded product according to the present invention was obtained by the same method as that employed in Example 15 excluding the point that the compression speed was changed from 1.0 mm/sec employed in the injection/compression molding method employed in Example 15 to 5.0 mm/sec and also the thickness of a heat insulating layer was changed from 2.0 in Example 15 to 0.5 mm.
The molding conditions employed the injection/compression molding methods in Examples 10 to 16 are shown in Table 5.

(Conditions for injection/compression molding)

Table 5

| | Die temperature (°C) | Interval between dies (mm) | Shear rate (/sec) | Compression speed (mm/sec) | Compression pressure (MPa) |
|---|---|---|---|---|---|
| Example 10 | 180 | 5.0 | 5100 | 5.0 | 50 |
| Example 11 | 180 | 5.0 | 34400 | 5.0 | 50 |
| Example 12 | 230 | 5.0 | 5100 | 5.0 | 50 |
| Example 13 | 230 | 5.0 | 34400 | 5.0 | 50 |
| Example 14 | 230 | 5.0 | 34400 | 5.0 | 50 |
| Example 15 | 230 | 2.0 | 34400 | 1.0 | 50 |
| Example 16 | 230 | 5.0 | 34400 | 5.0 | 50 |

[Test Example 3]

Measurement was made for the wall thickness distribution (A) and volume resistivity (B) of the molded products obtained in Examples 10 to 16 by the same method as that employed in Test Example 1. A result is shown in Table 6.

(Result)

Table 6

| | Wall thickness distribution (mm) | | Volume resistivity (mΩ·cm) | |
|---|---|---|---|---|
| | Maximum | Minimum | Maximum | Minimum |
| Example 10 | 1.68 | 1.53 | 20 | 20 |
| Example 11 | 1.55 | 1.51 | 20 | 15 |
| Example 12 | 1.62 | 1.51 | 20 | 15 |
| Example 13 | 1.51 | 1.51 | 15 | 15 |
| Example 14 | 1.65 | 1.56 | 20 | 15 |
| Example 15 | 1.69 | 1.58 | 20 | 15 |
| Example 16 | 1.51 | 1.51 | 15 | 15 |

As understood from the result shown in Table 6, , the molded products obtained by the injection/compression molding methods employed in Examples 10 to 16 each have the homogeneous wall thickness distribution and also has the excellent volume resistivity.
Like in Examples 1 to 9, dispersed state of graphite as a conductive filler in the conductive thermoplastic resin composition in the melted state to be injected was checked, and it was found in any of Examples 10 to 16 that the conductive filler was homogeneously dispersed like powder in the conductive thermoplastic resin composition when injected.

From the result described above, it was confirmed that, by using the injection/compression molding method according to the present invention employed in each of Examples 1 to 16, plate-formed molded products each having the homogeneous wall thickness distribution, containing the conductive filler homogeneously distributed therein at a high content rate could be obtained. The plate-formed molded products may be used, for instance, as a separator for a fuel cell in a wide range.

[INDUSTRIAL APPLICABILITY]

The injection/compression molding method for molding a conductive thermoplastic resin composition and the conductive thermoplastic resin molded product according to the present invention can be used, for example, as an injection/compression molding method for producing a separator for a cell.

**Claims**

1. A method of molding a conductive thermoplastic resin composition by means of injection/compression molding, comprising:

   a injection filling step for injection filling a conductive thermoplastic resin composition containing a conductive filler at a ratio of 70 to 95 mass% into a cavity space formed by mating faces of dies each having a temperature in the range of 150 to 250 °C, the space between the mating faces of dies being in the range of 0.5 to 5.0 mm; and
   a compression forming step for compression forming, after the filling step is finished and the die space was closed, the conductive thermoplastic resin composition filled in said space at a compression speed in the range of 1.0 to 20 mm/sec with the compression pressure of 20 MPa or higher.

2. The injection/compression molding method according to claim 1,
   wherein the shear rate expressed by the following expression (I) when said conductive thermoplastic resin composition is injected and filled is in the range of 5000 to 50000/sec:

$$\gamma_a = 4Q/\pi R^3 \quad \cdots\cdots \quad (I)$$

   (Here Q is injection rate (in cc/sec). R is radius of gate (in cm).)

3. The injection/compression molding method according to claim 1,
   wherein the shear rate expressed by the following expression (II) when said conductive thermoplastic resin composition is injected and filled is in the range of 5000 to 50000/sec:

$$\gamma_b = 6Q/Wh^2 \quad \cdots\cdots \quad (II)$$

   (Here Q is injection rate (in cc/sec), W is width of gate (in cm), and h is thickness of gate (in cm).)

4. The injection/compression molding method according to claim 1,
   wherein a supercritical fluid is injected into a molten conductive thermoplastic resin composition to be injected and filled.

5. The injection/compression molding method according to claim 4,
   wherein said supercritical fluid is carbon diode gas in the supercritical state and/or nitrogen gas in the supercritical state.

6. The injection/compression molding method according to claim 1,
   wherein a chemical foaming agent capable of generating carbon dioxide gas and/or nitrogen gas is added to said conductive thermoplastic resin composition.

7. The injection/compression molding method according to any of claims 1 to 6,

wherein a heat insulating layer with the thickness in the range of 0.5 to 3.0 mm is formed on a surface of said die.

8. The injection/compression molding method according to any of claims 1 to 7,
   wherein said thermoplastic resin is polyphenylene sulfide (PPS), and said conductive filler is graphite.

FIG.1

FIG.2

# FIG.3

| INTERNATIONAL SEARCH REPORT | International application No. |
|---|---|
| | PCT/JP2005/007148 |

A. CLASSIFICATION OF SUBJECT MATTER
    Int.Cl$^7$  B29C45/70, B29C45/26, H01M8/02//B29K81:00, B29K105:16,
          B29K507:04, B29L31:34

According to International Patent Classification (IPC) or to both national classification and IPC

B. FIELDS SEARCHED

Minimum documentation searched (classification system followed by classification symbols)
    Int.Cl$^7$  B29C45/00-45/84, B29C43/00-43/58, H01M8/00-8/24

Documentation searched other than minimum documentation to the extent that such documents are included in the fields searched
    Jitsuyo Shinan Koho          1922-1996    Jitsuyo Shinan Toroku Koho    1996-2005
    Kokai Jitsuyo Shinan Koho    1971-2005    Toroku Jitsuyo Shinan Koho    1994-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2003-82247 A  (Toray Industries, Inc.),<br>19 March, 2003 (19.03.03),<br>Claims; Par. Nos. [0027], [0064]<br>(Family: none) | 1-3,8<br>4-7 |
| Y | WO 2002/047893 A1  (BRUNEL UNIVERSITY),<br>20 June, 2002 (20.06.02),<br>Page 3, line 27 to page 4, line 2; example 3;<br>Claims<br>& JP 2004-524992 A       & AU 200222181 A<br>& EP 1341663 A1          & KR 2003064814 A<br>& US 2004/0084795 A1     & CN 1479671 A | 4,5 |

| ☒ | Further documents are listed in the continuation of Box C. | ☐ | See patent family annex. |
|---|---|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>    24 June, 2005 (24.06.05) | Date of mailing of the international search report<br>    12 July, 2005 (12.07.05) |
|---|---|
| Name and mailing address of the ISA/<br>    Japanese Patent Office | Authorized officer |
| Facsimile No. | Telephone No. |

Form PCT/ISA/210 (second sheet) (January 2004)

**INTERNATIONAL SEARCH REPORT**

International application No.

PCT/JP2005/007148

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2003-49017 A (Toray Industries, Inc.), 21 February, 2003 (21.02.03), Claims; Par. No. [0039]; comparative examples 13 to 15 (Family: none) | 4-6 |
| Y | JP 7-148744 A (General Electric Co.), 13 June, 1995 (13.06.95), Claims & EP 639439 A2 Claims | 7 |
| A | JP 2003-242994 A (Matsushita Electric Industrial Co., Ltd.), 29 August, 2003 (29.08.03), Claims; Par. No. [0029]; example 3 & EP 1267434 A2 Par. No. [0044]; example 3; Claims & US 2002/0197523 A1 & KR 2002094908 A & CN 1391301 A | 1-8 |
| P,X | JP 2004-160772 A (Meiki Co., Ltd.), 10 June, 2004 (10.06.04), Claims; Par. Nos. [0031], [0033]; Fig. 2 (Family: none) | 1-3,8 |
| P,X | JP 2004-263026 A (Dainippon Ink And Chemicals, Inc.), 24 September, 2004 (24.09.04), Claims; Par. Nos. [0006], [0007], [0030] (Family: none) | 1-3,8 |
| P,A | JP 2004-167777 A (Hitachi Maxell, Ltd.), 17 June, 2004 (17.06.04), Claims (Family: none) | 4,5 |

Form PCT/ISA/210 (continuation of second sheet) (January 2004)

**EP 1 736 295 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003082247 A

- JP 2003242994 A